(19) Europäisches Patentamt
European Patent Office
Office européen des brevets

(11) Veröffentlichungsnummer: **0 256 364 B1**

# (12) EUROPÄISCHE PATENTSCHRIFT

(45) Veröffentlichungstag der Patentschrift: **02.05.91**

(51) Int. Cl.[5]: **B22C 1/22**

(21) Anmeldenummer: **87110836.1**

(22) Anmeldetag: **27.07.87**

## (54) Bindemittel für Formsande.

(30) Priorität: **07.08.86 DE 3626663**

(43) Veröffentlichungstag der Anmeldung:
**24.02.88 Patentblatt 88/08**

(45) Bekanntmachung des Hinweises auf die Patenterteilung:
**02.05.91 Patentblatt 91/18**

(84) Benannte Vertragsstaaten:
**AT BE CH DE ES FR GB IT LI NL SE**

(56) Entgegenhaltungen:
**DE-A- 3 305 361**
**FR-A- 2 372 667**
**GB-A- 729 057**
**GB-A- 732 005**

(73) Patentinhaber: **Röhm GmbH**
**Kirschenallee Postfach 4242**
**W-6100 Darmstadt 1(DE)**

(72) Erfinder: **Klesse, Wolfgang, Dr.**
**Tucholskyweg 47**
**W-6500 Mainz 31(DE)**
Erfinder: **Auer, Heinz Jochen**
**Hanfgraben 13**
**W-6080 Gross-Gerau(DE)**
Erfinder: **Quis, Peter, Dr.**
**Pfannmüllerweg 26**
**W-6100 Darmstadt(DE)**

EP 0 256 364 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung

Die Erfindung betrifft Bindemittel für Formsande, insbesondere wärmeaushärtende Gießereiformsande auf der Basis von Emulsionspolymerisaten. Aus Gießereiforsanden werden unter Zusatz von Bindemittel Kerne und Formen für den Metallguß hergestellt.

Stand der Technik

Die Gießereitechnik wendet polymere Bindemittel zur Herstellung von Gießformen und Formkernen aus Gießereiformsanden für den Metallguß an. Die Gießereiformsande werden in der Regel mit den Bindemitteln, meist Furan- oder Phenolharzen so formuliert, daß die Sandkörner von einem dünnen Bindemittelfilm umhüllt werden. Anschließend füllt man die so hergestellten Sandformulierungen in ein geeignetes Metallwerkzeug (z.B. Kernkasten) und härtet bei Temperaturen zwischen 150 und 300 Grad C innerhalb kurzer Zeit, beispielsweise ca. 60 bis 80 Sekunden, aus.
Nach der Entnahme sind die geformten Teile wie Formkern und Schale hart, stabil und technisch einsatzfähig. Vorherrschend setzt man die polymeren Bindemittel in Form von Lösungen ein, relativ selten hingegen als Dispersion bzw. Emulsion.
"In der GB-A 729 057 wird die Anwendung eines wasserlöslichen polymeren Bindemittels vorgeschlagen. Wegen des aus Gründen der Rentabilität und der praktischen Anwendbarkeit zu fordernden hohen Gehalts an Polymerisat sind bei solchen Lösungen Probleme mit der Viskosität vorprogrammiert".
Da der Verwendung von organischen Lösungsmitteln als Träger von Bindemitteln in der Gießereitechnik begründete oekologische und oekonomische Bedenken entgegenstehen, wurden im US-A 4 585 809 Bindemittel auf Kunststoffbasis mit einem Gehalt an Carboxylgruppen in Form der wäßrigen Dispersion eines entsprechenden Polymeren vorgeschlagen.
Das Polymere P ist aufgebaut aus A) mindestens einem Monomeren mit wenigstens einer und nicht mehr als zwei Carboxylfunktionen im Molekül in Anteilen von mindestens 20 und höchstens 90 Gew.-% bezogen auf das Polymere P und B) aus mit A) copolymerisierenden Monomeren in Anteilen von 10 bis 80 Gew.-% bezogen auf P mit der Maßgabe, daß der Anteil von Carboxylatgruppen in der Salzform im Polymer P 20 % nicht überschreiten soll. Die Polymeren können dabei bis ca. 30 Gew.-% an nicht radikalisch vernetzenden Monomeren enthalten.

Aufgabe

Geht man, wie in der US-A 4 585 809 von wäßrigen Emulsionspolymerisaten als Bindern für Formsande aus, dann ist bei der Herstellung der Formsande darauf zu achten, daß die mit der Dispersion in den Sand eingebrachte Wassermenge so gering wie irgend möglich gehalten wird, um die Rießelfähigkeit des Formsandes möglichst wenig zu beeinträchtigen. Dieser Forderung wird man versuchen dadurch nachzukommen, daß man den Feststoffgehalt der Binder-Dispersionen möglichst hoch ansetzt. Die Erfahrung lehrt jedoch, daß es äußerst schwierig ist, bei Emulsionspolymerisaten mit hohen Anteilen an hydrophilen Monomeren hohe Feststoffgehalte zu erreichen, ohne daß erhebliche Mengen an Koagulat auftreten. Diese Schwierigkeit trifft insbesondere auf Emulsionspolymerisate mit einem hohen Gehalt an den Monomeren Acrylsäure und Hydroxy-gruppenhaltigen Estern neben Methacrylsäure zu.

Die US-A sieht u.a. eine Ausführungsart vor, bei der anschließend partielle Neutralisation der Carbonsäure-Funktionen im Polymerisat bis zu den angegebenen Grenzen von 20 % erfolgt. Damit tritt aber auch eine weitere Verdünnung der Dispersion ein, so daß häufig nur Feststoffgehalte der Disperisonen von weniger als 30 Gew.-% eingestellt werden können.
Das Interesse der Technik mußte demnach solchen Lösungen gelten, die auf eine Reduzierung des Wassergehalts hinausliefen, ohne die sonstigen Qualitäten der polymeren Bindemittel zu beeinträchtigen. Die allgemein gültigen Anforderungen an polymere Bindemittel für wärmeaushärtenden Gießereiformsande können mit den folgenden Stichworten wiedergegeben werden:

- hohe Dimensionsgenauigkeit der Formen bzw. Kerne,
- gute Beständigkeit gegen Erosion durch geschmolzenes Metall,
- möglichst glatte und geschlossene Oberflächen von Formen und Kernen,
- Härte und Manipulierbarkeit nach der Entnahme, z.B. im noch warmen Zustand,

- minimaler Nachreinigungsaufwand für die Gußstrucke,
- gute Entfernbarkeit des Kernsandes nach dem Guß,
- Wiederverwendbarkeit des Sandes,
- hohe Härtungsgeschwindigkeiten, Durchhärtung,
- Andwendbarkeit bei automatisierter Produktion,
- minimale Entwicklung schädlicher Gase.

Lösung

Es wurde nun gefunden, daß die Forderungen der Technik an polymere Bindemittel für Formsande in hervorragender Weise mittels getrockneter, redispergierbarer Emulsionspolymerisate erfüllt werden können, die man zur Anwendung in Wasser redispergiert.Das Anforderungsprofil enthält einige besonders wichtige Gesichtspunkte, die bei der Auswahl der Emulsionspolymerisate berücksichtigt werden müssen:

- Die Emulsionspolymerisate müssen einwandfrei redispergierbar sein, d.h. bei dem Wiederaufnehmen mit Wasser muß sich der Zustand der Dispersion der Teilchen wieder einstellen.
- Die getrockneten, redispergierbaren Emulsionspolymerisate müssen eine gute Filmbildung zeigen.
- Nach Bildung der Filme und dem Wegtrocknen des Wassers muß eine hohe Wärmeformbeständigkeit resultieren.

Als besonders geeignet im Sinne der vorliegenden Aufgabe haben sich getrocknete, insbesondere sprühgetrocknete Emulsionscopolymerisate P erwiesen, die mit Wasser einwandfrei redispergierbar sind.

Gegenstand der vorliegenden Erfindung ist somit ein Verfahren zur Herstellung von bindemittelhaltigen Formsanden FS unter Verwendung von polymeren Bindemitteln, wobei man nicht-befeuchteten bindemittelfreien Formsanden das Bindemittel in Form eines getrockneten, redispergierbaren Emulsionspolymerisats P, aufgebaut aus

A) 15 - 90, bevorzugt 20 - 60, insbesondere 20 -50 Gew.-% mindestens einer ungesättigten Carbonsäure der Formel I

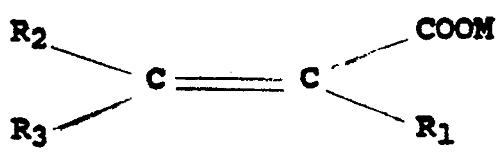

I

worin $R_1$, $R_2$ und $R_3$ Wasserstoff, einen Alkylrest mit 1 bis 6 Kohlenstoffatomen oder einen Rest $-(CH_2)_n-COOM$, bedeuten, wobei M für ein Proton oder in der Salzform für ein Alkali-, Erdalkali- oder Ammonium-Kation und n für null oder eins stehen und wobei die ungesättigten Carbonsäuren der Formel I nicht mehr als zwei Reste -COOM im Molekül besitzen, und

B) 10 - 85 Gew.-% aus weiteren mit A) copolymerisierenden Monomeren n mit der Maßgabe, daß die Monomeren A) zu 0,5 - 50 %, vorzugsweise 1 - 25 %, insbesondere 2 - 20 % in der Salzform vorliegen, wobei jedoch der Anteil der in Salzform vorliegenden Monomereinheiten 8 Gew.-% bezogen auf das Gesamtgewicht des nicht neutralisierten Emulsionspolymerisats nicht überschreiten soll und wobei M für ein Alkali-,Erdalkali- oder Ammoniumkation steht,

in Pulverform in gleichmäßiger Verteilung zumischt. Erfindungsgemäß sei das Emulsionspolymerisat P in Form eines getrockneten, insbesondere sprühgetrockneten Pulvers P in Wasser redispergierbar.

Als Kriterium für Redispergierbarkeit soll im Sinne der vorliegenden Erfindung gelten, daß das getrocknete Pulver P nach dem Eintragen in Wasser zu Teilchen im Teilchengrößenbereich von Latexteilchen redispergiert. Im allgemeinen bleibt der so erreichte Zustand der (Re)-Dispersion der Teilchen über einen Zeitraum von wenigstens Wochen, im allgemeinen über Monate hinweg stabil, d.h. die Dispersion läßt sich ähnlich wie die Primär-Dispersion handhaben. Es tritt z.B. keine ins Gewicht fallende Verklumpung ein. Brauchbar im Sinne der vorliegenden Erfindung sind getrocknete Pulver P , die zu wenigstens 80 Gew.-% in Wasser redispergieren.

Das getrocknete Pulver P besteht in der Regel aus lose aggregierten Feinpartikeln, d.h. es ist bei dessen Gewinnung aus dem Latex des Emulsions-Polymerisats darauf zu achten, daß die Latexteilchen als solche erhalten bleiben und nicht zu untrennbaren Aggregaten verschmelzen. Zweckmäßigerweise wendet man bei der Isolierung des Polymerisats Temperaturen an, die mindestens 20 Grad C unterhalb der dynamischen Einfriertemperatur $T_{max}$ der Polymerisate P liegen. Die Bestimmung von $T_{max}$ kann dabei

nach DIN 53 445/DIN 7724 vorgenommen werden.

Zur Gewinnung des Festproduktes sind vor allem die Sprühtrocknung und daneben die Fällung und Trocknung des Polymerisats nach in der Technik üblichen Methoden, beispielsweise durch Zusatz von Alkohol oder Elektrolyten oder durch Gefrierkoagulation geeignet (vgl. Houben-Weyl, Methoden der organischen Chemie, 4. Auflage, Teil 1, Band 14/1, S. 470 ff zur Fällung bzw. Ullmanns Encyclopädie der technischen Chemie, 4. Auflage, Band 2, S. 707 ff zur Trocknung). Weiterhin kommt die Gefriertrocknung in Frage. Unter Sprühtrocknung oder Zerstäubungstrocknung wird im Einklang mit der üblichen Terminologie die Zerteilung flüssiger Trockengüter in feine, nebelartige Tröpfchen und die Trocknung, gewöhnlich mit einem heißen Luftstrom, verstanden. (Vgl. Ullmanns Encyklopädie der techn. Chemie, 4. Auflage, Bd. 2, pg. 712, 713, Verlag Chemie, 1972) Als Zerstäubungseinrichtung werden Düsen (Einstoff- oder Zweistoffdüsen) oder rotierende Scheiben mit gewöhnlich einer Umdrehungszahl von 4 000 - 30 000 U/min verwendet (vgl. Masters Ind. Eng. Chemistry, 60, (1968) Nr. 10, S. 53 - 63). Die Lufteintrittstemperatur liegt zweckmäßig im Bereich 100 - 250 Grad C, die Austrittstemperatur bei 50 - 100 Grad C, vorzugsweise 60 - 90 Grad C. Die Verweilzeiten betragen ca. 0,1 bis 30 sec., vorteilhaft 0,5 - 10 sec. Letztlich entscheidend ist die Redispergierbarkeit der Polymerisate P. Diese kann auch dann vorliegen , wenn - insbesondere bei weicher eingestellten Polymerisaten - nach dem Trocknen scheinbar größere Aggregationen entstanden sind.

Das Verfahren der Gefriertrocknung (vgl. Ullmanns Encyclopädie der techn. Chemie, 4. Auflage, Bd. 2. S. 716 ff) wird im allgemeinen dann angewendet werden, wenn die oben beschriebenen Methoden nicht zu redispergierbaren Pulvern führen, was unter Umständen bei Polymerisaten P an der unteren Grenze des Bereichs geeigneter Einfriertemperaturen der Fall sein könnte. Das getrocknete Emulsionspolymerisat P liegt im allgemeinen in Form eines feinen, weißen Pulvers vor, dessen Körner in der Regel aber nicht aus einzelnen Latexteilchen, sondern aus lockeren Aggregaten vieler Latexteilchen bestehen, die sich jedoch ohne Kraftanwendung zerteilen lassen.

(Wenn beim Druck z.B. mit einer Nadel auf ein Pulverkörnchen splittrige Bruchstücke abspringen, so ist dies ein Zeichen dafür, daß die Latexteilchen verglast vorliegen und ohne Kraftaufwand nicht in kleine Einheiten zerteilbar sind). Die mittlere Korngröße beträgt 10 - 500 $\mu$m, insbesondere 30 - 150 $\mu$m.

Der Gehalt der getrockneten Emulsionspolymerisate P an Restwasser liegt im allgemeinen im Bereich von 0,05 bis 8 Gew.-%, speziell von 0,2 bis 5 Gew.-%. Als besonders vorteilhaft ist die überraschende Tatsache zu werten, daß es gelingt, aus Formsand und den polymeren Bindemitteln, die dem Formsand in Gestalt der getrockneten Emulsionspolymerisate P zugemischt worden sind, gebrauchsfertige und zugleich lagerfähige Formsande FS herzustellen. Diese gebrauchsfertigen Formsande FS lassen sich - ohne den als Ballast aufzufassenden Wassergehaltabwägen, verpacken, lagern, transportieren, dosieren. Nicht verbrauchte Restmengen lassen sich aufbewahren. Die Frostempfindlichkeit, die z.B. bei Verwendung von Polymer-Dispersionen eine Rolle spielt, entfällt hier. Zur unmittelbaren Anwendung z.B. zur Herstellung von Gießereiformkernen fügt man den bindemittelhaltigen Formsanden FS Wasser zu. Im allgemeinen steht das getrocknete Polymerisatpulver P' bei der Anwendung zu Wasser im Verhältnis 1 Gew.-Teil P' zu 1 Gew.-Teil Wasser bis 1 Gew.-Teil P' zu 10 Gew.-Teilen Wasser, vorzugsweise 1 Gew.-Teil P' zu 1,5 Gew.-Teilen Wasser bis 1 Gew.-Teil P zu 5 Gew.-Teilen Wasser. Der Anteil des Binders, d.h. der getrockneten Emulsionspolymerisate an den gebrauchsfertigen Formsanden FS beträgt 0,1 bis 20 Gew.-%, vorzugsweise 0,5 bis 5 Gew.-%, besonders bevorzugt 1 - 3 Gew.-%.

Unter "Sand" zur Verwendung des Formsand im Sinne der vorliegenden Erfindung sei die übliche feuerfeste, körnige Grundsubstanz verstanden, die aus gewaschenem klassiertem Quarzsand, in bestimmten Fällen auch aus Chromit-, Zirkon-oder Olivinsand, besteht. Daneben finden auch Schamotte-, Magnesit-, Sillimanit- oder Korundmaterialien Verwendung. Der Korndurchmesser liegt im allgemeinen im Bereich zwischen 0,1 und 0,5 mm. (Vgl. Kirk-Othmer, Encyclopädia of Chemical Technology, 3rd. Ed. Vol. 6, pp. 212 - 213, J. Wiley 1979) Bei einer bevorzugten Ausführungsart des Verfahrens sollen die Sande bei Anwendung allenfalls Haftwasser enthalten, d.h. ihr Wassergehalt ist < 0,5 Gew.-%. Überraschenderweise kann man in alternativer Verfahrensweise auch von befeuchtetenm Formsand ausgehen und diesem das trockene Emulsionspolymerisat zusetzen. Der Wassergehalt des Formsands soll aber zweckmäßigerweise 4,5 Gew.-% nicht überschreiten. Somit ist erfindungsgemäß die Anwendung von Formsande sowohl in trockenem Zustand als auch mit einem Wassergehalt bis zu 4,5 Gew.-%, vorzugsweise 0,5 bis 4,5 Gew.-%, insbesondere 3,0 ± 0,8 Gew.-% vorgesehen.

Die Eignung der erfindungsgemäß hergestellten Formsande FS im Sinne der oben dargestellten Anforderungen der Technik ist außerordentlich überraschend, ist doch ohne weiteres keine Modellvorstellung in Sicht, nach der die unerläßliche Filmbildung bei der dargestellten Verfahrensweise zu erwarten gewesen wäre. Bemerkenswert ist, daß es bei Anwendung trockener Formsande zur unmittelbaren Konditionierung genügt, die erfindungsgemäßen Formsande gleichmäßig zu befeuchten.

Das Emulsions-Copolymerisat P

Man geht aus von dem entsprechenden Emulsionspolymerisat, das in an sich bekannter Weise in wäßriger Dispersion hergestellt wird. (Vgl. US-A 4 585 809) d.h. seine Zusammensetzung ist grundsätzlich auf die Dispergierbarkeit in wäßriger Phase abgestimmt. Vorzugsweise weist das Copolymerisat P eine minimale Filmbildungstemperatur (MFT) nach DIN 53787 von kleiner 100 Grad C, bevorzugt kleiner 80 Grad C, auf. Weiter kommt ihm vorzugsweise eine dynamische Einfriertemperatur (T max) nach DIN 53445/ DIN 7724 von größer 100 Grad C, vorzugsweise größer 130 Grad C zu. Innerhalb bestimmter Voraussetzungen läßt sich die Wärmeformbeständigkeit bzw. die dynamische Einfriertemperatur ($T_{max}$) der Copolymerisate P durch Auswahl der Monomeren und ihrer Anteile in vorhersehbarer Weise steuern. (Vgl. Vieweg-Esser, Kunststoff-Handbuch, Bd. IX, Polymethacrylate, S. 333 - 340, C. Hanser-Verlag, 1975).
Die Salzbildung der sauren Gruppen (M = H) wird durch Umsetzung mit Basen erreicht. Als Basen kommen Alkalien oder Erdalkalien wie z.B. Natronlauge, Kalilauge, Soda, Pottasche, Natriumbicarbonat bzw. Calciumhydroxid sowie Ammoniak oder organische Amine, insbesondere Alkylamine mit bis zu 6-Kohlenstoffatomen im Alkylrest und zwar primäre, sekundäre und tertiäre Amine wie z.B. Triethylamin, Diethanolamin oder Triethanolamin in Frage. Die Anwesenheit eines begrenzten Anteils der Carboxylfunktion in Formel I in Salzform

$$(M = Na^{\oplus},\ K^{\oplus},\ Ca^{2\oplus},\ Mg^{2\oplus}\ \text{usw.})$$

ist von wesentlicher Bedeutung für die Redispergierbarkeit des Emulsionspolymerisats P. Entscheidend ist nicht nur die Absolutmenge der Monomeren der Formel I in Salzform, sondern auch welcher Gewichtsanteil derselben in Salzform (s. oben) vorliegt. Wenn der Anteil der in Salzform vorliegenden Monomereinheiten den Wert 0,5, speziell 0,1 Gew.-% bezogen auf das Gesamtgewicht des nicht neutralisierten Emulsionscopolymerisats unterschreitet, so wird in der Regel keine ausreichende Redispergierung erreicht. Liegt der Anteil über 8 Gew.-%, speziell über 10 Gew.-%, so gehen die Latexteilchen in einen stark gequollenen Zustand über, oder sie lösen sich vollständig in Wasser auf. In beiden Fällen kann keine technisch befriedigende Filmbildung mehr eintreten, bzw. die Viskosität des Systems verbietet einen technischen Einstaz. Die Menge der in Salzform vorliegenden Monomeren der Formel I wird vorzugsweise nicht größer gewählt, als zur Überführung in eine hinreichend stabile Redispersion ausreichend ist. Der Anteil an den Monomeren A) am Emulsionspolymerisat P beträgt 15 - 90, vorzugsweise 20 - 60, insbesondere 20 - 50 Gew.-% (bezogen auf die Gesamtheit der Monomeren) Vorzugsweise erstreckt sich die Bedeutung der Reste $R_1$, $R_2$ und $R_3$ in Formel I (wenn sie keine Reste -COOM darstellen oder enthalten) auf Wasserstoff oder Methyl.
Als Monomere vom Typ der ungesättigten Carbonsäuren der Formel I seien die Maleinsäure, die Fumarsäure, die Itaconsäure, insbesondere aber die Acryl- und die Methacrylsäure besonders genannt. Vorteilhaft können auch verschiedene Vertreter des Typs A) im Copolymerisat vorhanden sein.
Der Anteil der Monomeren B) am Emulsionspolymerisat P beträgt 10 - 85 Gew.-%, vorzugsweise 40 - 80 Gew.-% (bezogen auf die Gesamtheit der Monomeren).
Die monomeren Bestandteile B) der Copolymerisate P sind definitionsgemäß mit A) copolymerisierende, d.h. radikalisch polymerisierbare Monomere. Sie können beispielsweise durch die Formel II

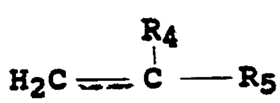

II

worin $R_4$ für Wasserstoff oder Methyl und $R_5$ für einen Rest $-COOR_6$, $-CONR_7R_8$, gegebenenfalls alkylsubstituiertes Phenyl, $-(CH_2)_m-O-R_9$, $-CH = CH_2$, oder einen inerten, 5 oder 6-gliedrigen heterocyclischen Rest steht, wobei $R_6$ für einen Alkylrest mit 1 bis 18 Kohlenstoffatomen, $R_7$ und $R_8$ unabhängig voneinander für Wasserstoff oder einen Alkylrest mit 1 bis 18 Kohlenstoffatomen oder zusammen gegebenenfalls unter Einbeziehung eines weiteren Stickstoff- oder Sauerstoffatoms einen fünf- oder sechsgliedrigen heterocyclischen Ring bilden können,$R_9$ für einen Alkylrest mit 1 bis 6 Kohlenstoffatomen oder einen Rest

$$-\overset{\displaystyle O}{\overset{\|}{C}}-R_{10}$$

worin $R_{10}$ für einen Alkylrest mit 1 bis 5 Kohlenstoffatomen und m für 0 oder 1 steht, dargestellt werden. Unter "alkylsubstituiert" sei vorzugsweise Substitution mit einem $C_1$-$C_3$-Alkylrest verstanden.

Unter die Komponente B) des Copolymeren P können gemäß einer bevorzugten Ausführungsart der Erfindung auch Monomere fallen, die bei einer Temperatur oberhalb 60 Grad C zu nicht-radikalischen Vernetzungsreaktionen befähigt sind. Diese (an sich radikalisch polymerisierenden) Monomeren enthalten im allgemeinen eine funktionelle Gruppe, die zu einer Vernetzungsreaktion mit funktionellen Gruppen andere Monomerer oder mit einem multifunktionellen (d.h. mindestens bifunktionellen) Vernetzungsreagenz, das selbst nicht radikalisch polymerisiert, bei einer Temperatur oberhalb 60 Grad C befähigt.

Die Temperatureschwelle von 60 Grad C ist angezeigt, um eine vorzeitige Vernetzung zu vermeiden. Es versteht sich, daß die Vernetzungsreaktion in dem Temperaturbereich oberhalb 60 Grad C eintreten soll, in dem die schließliche Formgebung stattfindet, beispielsweise im Bereich oberhalb 100 Grad C und bis 300 Grad C. Die nicht-radikalisch vernetzenden Monomeren stellen vorzugsweise 0,3 bis 30 Gew.-%, insbesondere 0,5 bis 20 Gew.-% des Copolymerisats P dar.

Die Bestandteile B) der Copolymerisate P fallen somit in die Gruppe

a) der Acryl- und Methacrylsäureester mit $C_1$-$C_{18}$-Alkoholen, insbesondere mit $C_1$-$C_8$-Alkoholen. Besonders genannt seinen das Methylmethacrylat, das Methylacrylat, Ethylacrylat, das Ethylmethacrylat, das Butylacrylat und das Butylmethacrylat, das Ethylhexylacrylat,

b) der Acryl- und Methacrylsäureamide und der am Stickstoff mit $C_1$-$C_8$-alkylsubstituierten Amide. Genannt seinen das Methacrylamid und besonders das Acrylamid,

c) Monomere, die bei einer Temperatur oberhalb 60 Grad C zu nicht-radikalischen Vernetzungsreaktionen befähigt sind, abgesehen von a) und b).

Vorzugsweise stellen diese Monomere Derivate der Acryl- oder der Methacrylsäure dar,

d) Styrol und alkylierte Styrole, beispielsweise $\alpha$-Methylstyrol sowie die kernalkylierten Styrole wie p-Methylstyrol,

e) Vinyläther und Vinylester, insbesondere der Methyl-bis Hexylvinyläther sowie Vinylacetat, Vinylpropionat, Vinylbutyrat,

f) heterocyclische Vinylverbindungen in Anlehnung z.B. an die in US-A 3 067 163 - in anderem Zusammenhang offenbarten - "stickstoffhaltigen Comonomeren" wie Vinylpyridin, Vinylpyrrolidon, Vinylimidazol, Vinylcarbazol, insbesondere N-Vinylverbindungen

g) Butadien.

Die Zusammensetzung der Komponente B) ist offenbar (soweit sie den getroffenen Definitionen und Merkmalen entspricht) nicht besonders kritisch, sieht man von den nicht-radikalisch vernetzenden Monomeren ab, und sofern das Emulsionspolymerisat P einen $T_1$max-Wert von mindestens 100 Grad C aufweist und die MFT unter 100 Grad C liegt.

Mit Vorteil setzt sich die Komponente B) aus mehreren Monomeren zusammen.

Besonders bevorzugt sind die Derivate der Acryl- und der Methacrylsäure, insbesondere die Ester und die Amide. An erster Stelle seien das Methylmethacrylat und das Ethylacrylat genannt.

Bei einer besonders bevorzugten Ausführungsart besteht daher das Copolymerisat P aus:

A') der Acryl- und/oder Methacrylsäure in Anteilen von 20 bis 60 Gew.-% und

B') aus Acryl- und/oder Methacrylsäureestern a) oder Acryl- und/oder Methacrylamiden b) bzw. beiden, gegebenenfalls zusammen mit heterocyclischen Vinylverbindungen e). Dabei machen die Monomeren a) vorzugsweise mehr als 70 Gew.-% der Komponente B) aus. Besonders bevorzugt ist die Ausführungsart, bei der die Komponenten A') und B') etwa im Verhältnis 1 : 1 bis 1 : 3 stehen.

Von besonderem Interesse ist ferner die Copolymerisation von Monomeren des Typs c). Diese Monomeren enthalten in der Regel eine funktionelle Gruppe, die nicht-radikalisch unter Reaktion mit einer anderen funktionellen Gruppe oder durch Reaktion mit einem multifunktionellen, nichtradikalischen Vernetzungsreagenz bei Temperaturen oberhalb 60 Grad C Vernetzung bewirkt.

Derartige Monomere und Vernetazungsreagentien sind an sich bekannt. Funktionelle Gruppen, welche die genannten Bedingungen erfüllen, sind z.B. die Hydroxy-, Epoxy-, N-Methylolamido-und davon abgeleitete Ether, und sogenannte maskierte oder geblockte Isocyanatgruppen neben den Carboxy-, Amid- und Esterfunktionen, die obligatorisch bzw. als weitere Bestandteile der Monomerengruppe B) vorhanden sind.

Die Vernetzung tritt bei diesem Typ von Vernetzern im allgemeinen infolge einer Kondensationsreaktion

(z.B. durch Eliminierung von Wasser, Amin, Alkohol oder Formaldehyd) oder mittels einer Additionsreaktion (z.B. durch nucleophilen Angriff auf eine Epoxid- oder maskierte Isocyanat-Funktion) ein.
Besonders geeignet sind vernetzende Monomere der Gruppe c), die z.B. der Formel III entsprechen.

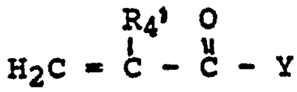

III

worin $R_4'$ für Wasserstoff oder Methyl, Y für eine Gruppe

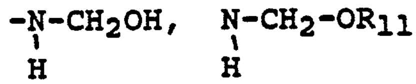

oder eine Gruppe Q-B-Z steht, wobei Q Sauerstoff oder $-NR_{12}$, B eine gegebenenfalls verzweigte Kohlenwasserstoffkette oder einen Ring mit 1 bis 8 Kohlenstoffatomen, Z eine Hydroxygruppe oder eine Gruppe

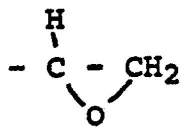

oder eine Gruppe $NHR_{13}$ und $R_{11}$ und $R_{13}$ einen Alkylrest mit 1 bis 8 Kohlenstoffatomen, $R_{12}$ Wasserstoff oder einen Alkylrest mit 1 bis 8 Kohlenstoffatomen bedeuten.
Genannt seinen insbesondere N-Methylolacrylamid und -methacrylamid, die davon abgeleiteten Ether, Hydroxyalkylmethacrylsäureester und -acrylester sowie die Hydroxyalkylamide der Acryl- und der Methacrylsäure, insbesondere die Hydroxyethyl- und die Hydroxypropylverbindungen.

Voraussetzung für das Eintreten einer effektiven Vernetzung ist im vorliegenden Fall die Gegenwart von mindestens zwei Partnern innerhalb verschiedener Copolymerketten, die mittels Kondensations- oder Additionsreaktion im Temperaturbereich ab 60 Grad C und bis ca. 200 Grad C reagieren.

Zusätzlich zu den genannten Partnern kann ferner die Anwesenheit eines multifunktionellen Vernetzungsreagenzes erforderlich sein, das selbst nicht radikalisch polymerisiert werden kann und das mit den genannten Partnern oberhalb 60 Grad C reagiert.
Derartige multifunktionelle, nicht-radikalische Vernetzungsreagentien sind an sich bekannt. Sie sollen mindestens zwei funktionelle Gruppen, z.B. Hydroxy-, Epoxy- oder blockierte Isocyanat-Gruppen enthalten, die an einer abstandhaltenden Einheit, gewöhnlich einer Kohlenwasserstoffkette fixiert sind. Die Kohlenwasserstoffkette kann von 2 bis $10^3$, vorzugsweise von 2 bis 20 Kohlenstoffatome enthalten mit einem Minimum von 2 funktionellen Gruppen und einem Maximum an funktionellen Gruppen, das der Zahl der Kohlenstoffatome in der Kette entspricht. Ein Bruchteil der $-CH_2$-Einheiten der Kohlenstoffkette kann durch andere, unter den Reaktionsbedingungen inerte Gruppen ersetzt sein, beispielsweise durch Etherbrücken. Im allgemeinen sind die Partnermoleküle, die eine solche nicht-radikalische Vernetzung eingehen können, im molaren Verhältnis 20 : 1 bis 1 : 1 vorhanden.
Multifunktionelle, nicht-radikalische Vernetzungsreagentien mit mindestens zwei Isocyanatgruppen im Molekül kommen zweckmäßig in Form von "blockierten" oder "maskierten" Isocyanatverbindungen zur Anwendung. Derartige Blockierungen schließen z.B. die Reaktion der mehrfach isocyanatsubstituierten Verbindungen (Diisocyanate) mit Polyolen ein. Genannt sei z.B. das Reaktionsprodukt des 2,4- oder 2,6-Toluylendiisocyanats mit Polyolen, z.B. der Verbindung $CH_3CH_2C(CH_2OH)_3$, welches mit Phenol zum Phenylurethan reagiert. Solche "Blockierte Isocyanate" sind im Handel, beispielsweise unter der Bezeichnung DESMODUR AP® der Bayer AG. Als Polyexoxy-Verbindungen, die sich zur Anwendung bei der Vernetzung der Polymeren eignen, seien die aus der Reaktion von Bisphenol A mit Epichlorhydrin hervorgegangenen genannt, beispielsweise das Produkt EPIKOTE 1001® der Shell Chemie mit einem MW von 900.

Wie bereits erwähnt, umfassen die zur Vernetzung führenden Kondensations- oder Additionsreaktionen Umsetzungen zwischen beispielsweise den folgenden funktionellen Gruppen:

| Am Monomer | an dem multifunktionellen, nicht-radikalischen Vernetzungsreagenz |
| --- | --- |
| i) -COOR<br>R = Alkyl | vii) 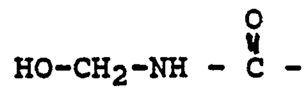 |
| ii) -COOH | viii) HO - $CH_2$ - |

| Am Monomer | an dem multifunktionellen, nicht-radikalischen Vernetzungsreagenz |
| --- | --- |
| iii) -$CH_2OH$ | ix) 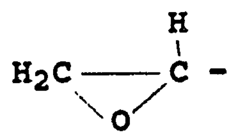 |
| iv) 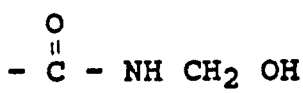 | |
| v) 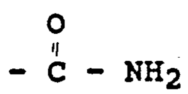 | xi) blockiertes Isocyanat |
| vi) 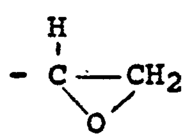 | |

Die hauptsächlichen Reaktionsweisen dürften dabei die folgenden Umsetzungen umfassen:

i) mit iii), iv), vii), viii), oder ix)
ii) mit iii), iv), vi) vii), ix) oder x)
iv) mit v) vii), viii), ix) oder x)
v) mit v)

Ebenfalls bevorzugt ist eine Ausführungsart, bei der die Komponente B) ganz oder teilweise aus Styrol und/oder dessen Derivaten gemäß d) besteht.

Im allgemeinen liegen die Molgewichte der erfindungsgemäß zu verwendenden Copolymerisate P im Bereich $5 \times 10^4$ bis $2 \times 10^6$, insbesondere im Bereich $2 \times 10^5$ bis $1 \times 10^6$. (Bestimmung durch Gel-Permeationschromatographie, vgl. Dawkins, Gel Permeation Chromatography of Polymers, Elsevier, Amsterdam, 1978)

Bei einer weiteren vorteilhaften Ausgestaltung der Erfindung kann das Bindemittel in der wäßrigen Dispersion neben dem Copolymerisat P noch in Anteilen von 1 bis 10 Gew.-% (bezogen auf das Copolymerisat P ein radikalisch vernetzendes Monomeres V) mit einem Siedepunkt > 150 Grad C

zusammen mit einem im vernetzenden Monomeren löslichen Initiator mit einem Zerfallspunkt oberhalb 100 Grad C in Mengen von 0,1 bis 5 Gew.-%, bezogen auf das Monomere M, enthalten. Solche radikalisch vernetzenden Monomere sind bekanntlich Verbindungen mit mehr als einer radikalisch polymerisierenden Doppelbindung im Molekül, beispielsweise die Acryl- bzw. Methacrylester von Polyolen

Herstellung der Dispersionen

Die Herstellung der wäßrigen Dispersionen der Copolymerisate P kann in an sich bekannter Weise, insbesondere in Anlehnung an US-A 4 585 809 durch Emulsionspolymerisation vorgenommen werden. Es kann dabei nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat -3 Gew.-% nicht überschreiten.

Als Initiator können neben den in der Emulsionspolymerisation üblichen Verbindungen, wie z.B. Perverbindungen wie Wasserstoffperoxid, Ammoniumperoxidisulfat (APS) auch Redoxsysteme wie Bisulfit-APS-Eisen sowie Azo-Starter verwendet werden. Die Initiatormenge liegt im allgemeinen bei 0,005 bis 0,5 Gew.-%, bezogen auf das Polymerisat. (Vgl. H. Rauch-Puntigam, T. Völker "Acryl- und Methacrylverbindungen", Springer-Verlag, 1967, S. 217 - 299).

Die Polymerisationstemperatur richtet sich innerhalb gewisser Grenzen nach den Initiatoren. So arbeitet man bei Anwendung von APS vorteilhaft im Bereich von 60 bis 90 Grad C. Bei Einsatz von Redoxsystemen kann auch bei tieferen Temperaturen, beispielsweise bei 30 Grad C polymerisiert werden. Neben der Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %ige Dispersion so erzeugt, daß man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt. Der Teilchendurchmesser der erfindungsgemäß verwendeten Dispersion liegt in der Regel bei 0,05 bis 5 µm, bevorzugt bei 0,1 bis 1 µm, insbesondere 0,1 bis 0,5 µm.

Herstellung der bindemittelhaltigen Formsande FS aus trockenem Formsand.

Die Herstellung der gebrauchsfertigen Formsande FS (die allenfalls Haftwasser enthalten), geschieht durch vorzugsweise langsames Zumischen der getrockneten Emulsionspolymerisate P in den definierten Mengen zu den Formsanden mit Hilfe der für Feststoffe geeigneten Mischverfahren und -aggregate (Vgl. Ullmann s Encyclopädie der Techn. Chemie 4. Auflage Bd. 2, S. 301 bis 311, Verlag Chemie, 1972) z.B. mit Hilfe rotierender Mischwerkzeug. Dabei ist auf eine homogene Verteilung zu achten. Gegebenenfalls können den Formsanden auch noch weitere, verträgliche an sich übliche Zusatzstoffe beigefügt werden, z.B. Schlichtstoffe wie Graphit u. ä.. Gegebenenfalls findet zu diesem Zeitpunkt auch die Zumischung der multifunktionellen, nicht-radikalischen Vernetzungsreagentien statt.

Die so hergestellten Formsande kFS (noch ohne Wasserzusatz) stellen leicht handhabbare, rieselfähige Massen dar, die den Anforderungen an die Lager- und Transportfähigkeit voll entsprechen.

Ferner ist möglich, wenn auch nicht bevorzugt, das Emulsionspolymerisat P dem Sand in der sauren, nicht neutralisierten Form zuzusetzen und die erforderliche Base erst zusammen mit dem Wasser in die bindemittelhaltigen Formsande einzubringen. Auch das umgekehrte Vorgehen, nämlich zunächst Befeuchten des Sandes und dann Einbringen der Polymerisatpulver P' erscheint durchführbar. Außerhalb der Lehre der vorliegenden Erfindung liegt jedoch das Einbringen in Form einer wäßrigen Dispersion.

Anwendung der nicht-befeuchteten bindemittelhaltigen Formsande FS

Zunächst fügt man dem bindemittelhaltigen Formsand FS das Wasser im vorstehend angegebenen Verhältnis (bezogen auf das Polymerisatpulver P') zu. Als günstige Faustregel hat sich z.B. erwiesen, daß bei einem Anteil von 1 Gew.-% Polymeres Bindemittel P' dem Sand ca. 2,5 ± 1 Gew.-% Wasser zugesetzt werden.

Die Zudosierung des Wassers geschieht zweckmäßig durch Besprühen des Formsandes FS, der vorteilhaft gleichzeitig bewegt (gerührt) wird. Das Zudosieren des Wassers wird zweckmäßig so vorgenommen, daß

das Wasser von vorneherein möglichst verteilt wird. Danach richtet sich auch die Zugebegeschwindigkeit. Als Anhalt sei ein Zeitraum von 5 Minuten angegeben. Zweckmäßig wird solange bewegt (gerührt) bis eine möglichst homogene Verteilung und Durchmischung gewährleistet ist.
Der so hergestellte feuchte Formsand ist rieselfähig und kann unmittelbar z.B. zur Herstellung von Gießereikernen verwendet werden, z.B. auf der Kernschießmaschine.

Herstellung der bindemittelhaltigen Formsande FS aus befeuchtetem Formsand.

2 000 g trockener Formsand (H32) wird unter Rühren durch Sprühen mit 73 g Wasser befeuchtet, so daß gleichmäßige Befeuchtung eintritt. Anschließend gibt man unter guter mechanischer Durchmischung mit einem Rührwerk 40 g des Polymerpulvers P' zu.
Man erhält einen feuchten, rieselfähigen, leicht klebrigen Formsand FS. Mit so hergestelltem Formsand lassen sich gute, technisch völlig einwandfreie Probekörper herstellen.
Mischt man hingegen mehr als 5 Gew.-% Wasser zu dem Sand, wird er bei Zugabe des Polymerisatpulver P matschig, d.h. technisch unbrauchbar.

A. Herstellung des bindemittelhaltigen, trockenen Formsands FS

Quarzsand H32 (Produkt der Quarzwerke Köln, Lagerstätte Haltern) wird mit einem Beba-Zwangsmischer (bei 100 - 300 UpM) gerührt und 2 Gew.-% Polymerisatpulver P hergestellt nach Beispiel 1 langsam dazugegeben.
Man erhält ein gut rieselfähiges Material, das den techn. Anforderungen in allen Stücken entspricht.

B. Anwendung des bindemittelhaltigen, trockenen Formsandes FS

Zu dem gemäß A. hergestellten bindemittelhaligen, trockenen Formsand werden innerhalb von 5 Minuten 3,7 Gew.-% Wasser (bezogen auf den Formsand) aufgesprüht.
Der entstandene, feuchte, rieselfähige Formsand wird auf einer Kernschießmaschine (Röper H 6,5-EW/28, G 73/32) geschossen.
Schießdruck: 6 bar
Schießzeit: 3 - 5 sec.
Backzeit: 60 - 70 sec.
Temperatur des Kernkastens: 200 Grad C

Man erhält Kerne, die eine glatte, feste Oberfläche haben. Sie werden mit verschiedenen Schlichten (Alkohol/Schwarz, Wasser/Grau) überzogen und im Metallguß eingesetzt. Es resultieren fehlerfreie Gußstücke.

## BEISPIELE

### Beispiel 1

Herstellung des Bindemittels

A. Herstellung der Dispersion

In einem Reaktionsgefäß aus rostfreiem Stahl mit 100 l Fassungsvermögen ausgerüstet mit Rückflußkühler, Rührwerk und Zulaufgefäß werden 12,25 g Tri-isobutylphenolpolyglycolethersulfat-Na-Salz (Ethoxylierungsgrad 7) und 49 g Ammoniumperoxidisulfat in 19 600 g entsalztem Wasser bei 20 Grad C gelöst.
In diese Lösung wird eine Emulsion aus

| | | |
|---|---|---|
| 10 500 | g | Methylmethacrylat |
| 1 050 | g | Ethylacrylat |
| 1 050 | g | Hydroxyethylacrylat |
| 2 100 | g | Acrylsäure |
| 6 300 | g | Methacrylsäure |
| 478 | g | Tri-isobutylphenolpolyglycolethersulfat, Na-Salz (Ethoxylierungsgrad 7) |
| 49 | g | Ammoniumperoxodisulfat und |
| 30 500 | g | entsalztes Wasser |

bei 80 Grad C unter Rühren innerhalb von 4 Stunden zudosiert. Nach Zulaufende wird der Ansatz noch eine Stunde bei 80 Grad C gehalten und dann auf Raumtemperatur abgekühlt. Dann werden 17 150 g einer 2,5 %-igen NaOH-Lösung unter Rühren über 80 Minuten zugetropft und die Dispersion filtriert.

Die niedrigviskose Dispersion hat einen Trockengehalt von 25,3 %. Der Teilchenradius, bestimmt über die Photonenkorrelationsspektroskopie, beträgt 94 nm, der pH-Wert 5,0; MFT: 50 Grad C, $T_1max$ = 165 Grad C.

B. Trocknen der Dispersion.

Zum Trocknen der Dispersion wurde eine Sprühtrocknungsanlage verwendet, die mit einer schnell rotierenden Zerstäuberscheibe (20 000 UpM) ausgerüstet ist und im Gleichstrom mit Luft von 140 Grad C durchströmt wird. Das Mengenverhältnis der Dispersion zur Luft wurde so eingestellt, daß das Sprühgut die Anlage bei einer Luftaustrittstemperatur von 68 Grad C in Form eines trockenen, feinteiligen, weißen bis durchscheinenden, keine glasigen Bestandteile enthaltenden Pulvers verläßt. Der Durchsatz an Trockenluft betrug 400 $m^3/h$.

C. Prüfung der Redispergierbarkeit

20 g des sprühgetrockneten Pulvers wurden in 80 g Wasser eingerührt und 30 Minuten homogenisiert. Das Pulver ließ sich vollständig redispergieren. Als Teilchenradius wurden 98 nm bestimmt.

## Ansprüche

1. Verfahren zur Herstellung von bindemittelhaltigen Formsanden unter Verwendung von polymeren Bindemitteln,

   dadurch gekennzeichnet,

   daß man den bindemittelfreien Formsanden das Bindemittel in Form eines getrockneten, in Wasser redispergierbaren Emulsionspolymerisats P, aufgebaut aus

   A) 15 - 90 Gew.-% mindestens einer ungesättigten Carbonsäure der Formel I

   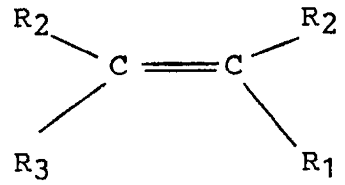

   I

   worin $R_1$, $R_2$ und $R_3$ Wasserstoff, einen Alkylrest mit 1 bis 6 Kohlenstoffatomen oder einen Rest -- $(CH_2)_n$-COOM, bedeuten, wobei M für ein Proton oder in der Salzform für ein Alkali-oder Erdalkali- oder Ammoniumkation und n für null oder eins stehen und wobei die ungesättigten Carbonsäuren der Formel I nicht mehr als zwei Reste -COOM im Molekül besitzen, und

B) 10 - 85 Gew.-% aus weiteren mit A) copolymerisierenden Monomeren mit der Maßgabe, daß die Monomeren A) zu 0,5 bis 50 Gew.-% in der Salzform vorliegen, wobei jedoch der Anteil der in Salzform vorliegenden Monomereinheiten 8 Gew.-% bezogen auf das Gesamtgewicht des nicht neutralisierten Emulsionspolymerisats nicht überschreiten soll und wobei M für ein Alkali-, Erdalkali- oder Ammoniumkation steht, in Pulverform in gleichmäßiger Verteilung zumischt.

**2.** Verfahren gemäß Anspruch 1, dadurch gekennzeichnet, daß das Bindemittel in Mengen von 0,1 bis 20 Gew.-% bezogen auf den Formsand zugemischt wird.

**3.** Verfahren gemäß den Ansprüchen 1 und 2, dadurch gekennzeichnet, daß das Bindemittel in Mengen von 1 bis 3 Gew.-% bezogen auf den Formsand zugemischt wird.

**4.** Verfahren gemäß den Ansprüchen 1 bis 3, dadurch gekennzeichnet, daß man das getrocknete Bindemittel den bindemittelfreien, trockenen Formsanden zumischt.

**5.** Verfahren gemäß den Ansprüchen 1 bis 3, dadurch gekennzeichnet, daß man das getrocknete Bindemittel den befeuchteten Formsanden zumischt.

**6.** Verfahren gemäß Anspruch 5, dadurch gekennzeichnet, daß man das getrocknete Bindemitel Formsanden mit einem Wassergehalt von 0,5 bis zu 4,5 Gew.-% zumischt.

## Claims

**1.** Process for preparing binder-containing moulding sands using polymeric binders, characterised in that the binder is mixed in with the binder-free moulding sands in the form of a dried emulsion polymer P which is re-dispersible in water and is made up of

A) 15 to 90 wt.-% of at least one unsaturated carboxylic acid of formula I

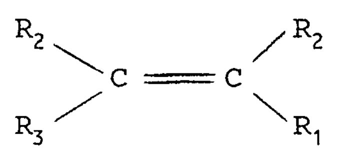

I

wherein $R_1$, $R_2$ and $R_3$ represent hydrogen, a $C_{1-6}$-alkyl group or a group $-(CH_2)_n-COOM$, where M represents a proton or, in the salt form, represents an alkali or alkaline earth metal or ammonium cation and n represents zero or one and wherein the unsaturated carboxylic acids of formula I have no more than two -COOM groups in the molecule, and

B) 10 to 85 wt.-% of other monomers which copolymerise with A), with the proviso that the monomers A) are present in an amount of 0.5 to 50 wt.-% in the salt form, but the proportion of monomer units present in salt form should not exceed 8 wt.-%, based on the total weight of the unneutralised emulsion polymer, and wherein M represents an alkali , alkaline earth metal or ammonium cation, in powder form and in uniform distribution.

**2.** Process according to claim 1, characterised in that the binder is added in amounts of from 0.1 to 20% by weight, based on the moulding sand.

**3.** Process according to claims 1 and 2, characterised in that the binder is added in amounts of from 1 to 3 wt.-%, based on the moulding sand.

**4.** Process according to claims 1 to 3, characterised in that the dried binder is added to the binder-free, dry moulding sands.

**5.** Process according to claims 1 to 3, characterised in that the dried binder is added to the moistened moulding sands.

6. Process according to claim 5, characterised in that the dried binder is added to moulding sands with a water content of from 0.5 to 4.5 wt.-%.

## Revendications

1. Procédé de préparation de sables de moulage contenant un liant avec utilisation de liants polymères, caractérisé en ce qu'aux sables de moulage exempts de liant, on mélange, sous forme de poudre à distribution uniforme, le liant sous la forme d'un produit de polymérisation en émulsion P séché et redispersable dans l'eau, composé de

   A) 15 à 90% en poids d'au moins un acide carboxylique insaturé de formule I

   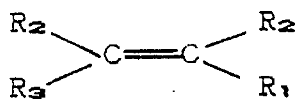

   I

   dans laquelle $R_1$, $R_2$ et $R_3$ représentent chacun un atome d'hydrogène, un reste alkyle à 1-6 atomes de carbone ou un reste $-(CH_2)_n-COOM$, M étant mis pour un proton ou, sous la forme de sel, pour un cation alcalin, alcalino-terreux ou ammonium et n est mis pour 0 ou 1, l'alcool carboxylique insaturé de formule I ne renfermant pas plus de deux restes -COOM dans la molécule, et

   B) 10 à 85% en poids d'autres monomères copolymérisables avec A),

   étant spécifié que les monomères A) sont présents sous la forme de sel pour 0,5 à 50% en poids, la part des unités monomères présentes sous forme de sel ne devant toutefois pas dépasser 8% en poids par rapport au poids total du produit de polymérisation en émulsion non neutralisé, et M étant mis pour un cation alcalin, alcalino-terreux ou ammonium.

2. Procédé selon la revendication 1, caractérisé en ce que le liant est ajouté dans des proportions de 0,1 à 20% en poids par rapport au sable de moulage.

3. Procédé selon la revendication 1 ou 2, caractérisé en ce que le liant est ajouté dans des proportions de 1 à 3% en poids par rapport au sable de moulage.

4. Procédé selon l'une quelconque des revendications 1 à 3, caractérisé en ce qu'on ajoute le liant séché aux sables de moulage exempts de liant et secs.

5. Procédé selon l'une quelconque des revendications 1 à 3, caractérisé en ce qu'on ajoute le liant séché aux sables de moulage humidifiés.

6. Procédé selon la revendication 5, caractérisé en ce qu'on ajoute le liant séché aux sables de moulage ayant une teneur en eau de 0,5 à 4,5% en poids.